(19) Europäisches Patentamt
European Patent Office
Office européen des brevets

(11) **EP 3 608 836 B1**

(12) **FASCICULE DE BREVET EUROPEEN**

(45) Date de publication et mention
de la délivrance du brevet:
**06.01.2021 Bulletin 2021/01**

(51) Int Cl.:
***G06K 9/00*** *(2006.01)*      ***G06K 9/32*** *(2006.01)*
***G06K 9/34*** *(2006.01)*

(21) Numéro de dépôt: **19189803.0**

(22) Date de dépôt: **02.08.2019**

(54) **PROCEDE POUR OBTENIR UNE IMAGE D'EMPREINTE DIGITALE**

VERFAHREN ZUM ERFASSEN EINES FINGERABDRUCK-BILDS

METHOD FOR OBTAINING A DIGITAL FINGERPRINT IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.08.2018 FR 1857448**

(43) Date de publication de la demande:
**12.02.2020 Bulletin 2020/07**

(73) Titulaire: **Idemia Identity & Security France
92400 Courbevoie (FR)**

(72) Inventeur: **KAZDAGHLI, Laurent
92400 COURBEVOIE (FR)**

(74) Mandataire: **Cabinet Le Guen Maillet
3, impasse de la Vigie
CS 71840
35418 Saint-Malo Cedex (FR)**

(56) Documents cités:
**WO-A1-2018/106987**

## Description

L'invention concerne un procédé permettant d'obtenir une image d'au moins une empreinte digitale à partir d'une pluralité d'images acquises par un capteur d'images d'un système de capture d'empreintes digitales et un dispositif mettant en œuvre le procédé.

## Contexte de l'invention

L'utilisation d'empreintes digitales, par exemple du type empreinte d'un doigt, d'une pluralité de doigts, d'une paume de main, permet de sécuriser des accès à des bâtiments ou à des machines. Utiliser cette technologie permet de renforcer la sécurité dans la mesure où la probabilité que deux personnes aient deux empreintes digitales identiques est quasiment nulle.

Un système de capture d'empreintes digitales permet d'obtenir au moins une image d'au moins une empreinte digitale. Dans le cas d'une identification, chaque empreinte est comparée avec un ensemble d'empreintes digitales de référence contenues dans une base de données. Dans le cas d'une authentification, chaque empreinte est comparée à une seule empreinte digitale. La comparaison permet de déterminer si chaque empreinte digitale obtenue appartient ou non à une personne référencée dans la base de données ou si la personne est bien celle qu'elle prétend être.

Certains systèmes de capture d'empreintes digitales capturent une séquence d'images d'empreintes. C'est notamment le cas de certains systèmes de capture d'empreintes digitales par contact qui ne sont pas configurés pour assurer une stabilité du (ou des) doigt(s) devant le capteur d'images ou pas configurés pour que chaque doigt soit appuyé de la même manière et au même moment sur le système de capture d'empreintes digitales. C'est aussi le cas des systèmes de capture d'empreintes digitales sans contact devant lesquels on fait passer le (ou les) doigt(s) sans qu'aucun doigt ne touche ledit système. Durant la capture d'images, chaque doigt est en mouvement devant le capteur d'images. Ce type de système de capture d'images utilise alors un procédé d'obtention d'images permettant d'obtenir une image finale à partir des images de la séquence. L'image finale correspond soit à l'image de la séquence représentant au mieux chaque empreinte digitale, soit à des portions d'images de la séquence, chaque portion représentant au mieux une empreinte.

Bon nombre de systèmes de capture d'empreintes digitales actuels utilisent des capteurs d'images, dits capteurs optiques, tels que les capteurs d'images de type CCD (dispositif à transfert de charge, « charge-coupled device » en terminologie anglo-saxonne) ou CMOS (semiconducteur metal-oxyde complémentaires, « complementary metal-oxide-semiconductor » en terminologie anglo-saxonne). D'autres types de capteurs d'images tels que les capteurs d'images de type TCM (transistors en couches minces, « thin-film transistors (TFT) » en terminologie anglo-saxonne), dits capteurs TCM, pourraient avantageusement être utilisés dans les systèmes de capture d'empreintes digitales.

Les images acquises par un capteur d'images ont des propriétés différentes suivant le type de capteur d'images utilisé. Ainsi un capteur optique possède une fréquence d'acquisition d'images plus faible qu'un capteur TCM. Mais, les images acquises par un capteur optique, du fait de leur temps d'acquisition plus important, sont de qualité supérieure aux images acquises par un capteur TCM.

Les procédés d'obtention d'images utilisés par les systèmes de capture d'empreintes digitales capturant une séquence d'images d'empreintes sont en général adaptés aux caractéristiques du capteur d'image utilisés par ledit système. Ces procédés sont notamment adaptés à la fréquence d'acquisition d'images de ces capteurs. Ainsi un procédé destiné à fonctionner avec des images fournies par un capteur optique (respectivement un capteur TCM), ne peut fonctionner correctement avec des images fournies par un capteur TCM (respectivement un capteur optique).

WO2018/106987A1 décrit le suivi des empreintes digitales d'une main dans une séquence d'images et l'attribution d'une note de confiance.

Il est souhaitable de pallier ces inconvénients de l'état de la technique. Il est notamment souhaitable de proposer un procédé d'obtention d'images qui puisse s'adapter à tout type de capteurs d'images utilisé.

## EXPOSE DE L'INVENTION

Selon un premier aspect de l'invention, l'invention concerne un procédé permettant d'obtenir une image d'au moins une empreinte digitale à partir d'une séquence d'images acquises par un capteur d'images d'un système de capture d'empreintes digitales faisant des acquisitions d'images avec une fréquence d'acquisition d'images prédéfinie dépendante dudit capteur d'images. Le procédé comprend : obtenir une image, dite première image segmentée, résultant d'une application d'un procédé de segmentation d'images sur une première image acquise, ledit procédé de segmentation étant adapté pour identifier des régions correspondant à des empreintes dans une image; pour chaque image acquise, dite seconde image acquise, suivant la première image acquise appliquer un traitement comprenant: obtenir une image, dite seconde image segmentée, résultant d'une application du procédé de segmentation d'images à la seconde image acquise; appliquer un procédé de suivi de régions aux régions identifiées dans chaque image segmentée depuis la première image segmentée jusqu'à la seconde image segmentée ; déterminer une note de confiance pour chaque région identifiée, la note de confiance d'une région de la seconde image segmentée associée à une région d'une image segmentée précédente étant une somme entre la note de confiance de ladite région de l'image précédente et d'un incrément dépendant de la fréquence d'acquisition d'images prédéfinie, et la note de confiance d'une région identifiée dans au moins une image segmentée précédant la seconde image segmentée mais n'ayant pas de région correspondante dans la seconde image segmentée étant une différence entre la note de confiance de ladite région de l'image segmentée précédente et d'un deuxième incrément dépendant de la fréquence d'acquisition d'images prédéfinie et, déterminer un nombre de régions, dites régions admissibles, identifiées dans les images segmentées depuis la première image segmentée jusqu'à la deuxième image segmentée ayant une note de confiance supérieure à un premier seuil prédéterminé ; et, lorsque le nombre de régions admissibles est égal à un deuxième seuil prédéterminé, mettre fin aux acquisitions d'images et générer une information permettant d'obtenir une image comprenant, pour chaque région admissible, une zone d'une image acquise correspondant à la région admissible.

Le procédé permet donc d'adapter l'évolution de la note de confiance de chaque région en fonction de la fréquence d'acquisition d'images. De cette manière, le procédé permettant d'obtenir une image est adapté à n'importe quel type de capteur d'images.

Ainsi, la note de confiance d'une région détectée dans une image segmentée précédente croit lorsque ladite région est détectée dans la seconde image segmentée et décroit lorsque ladite région n'est pas détectée dans la seconde image segmentée.

Selon un mode de réalisation, pour chaque région de la seconde image segmentée n'ayant pas de région correspondante dans une image segmentée précédente, dite nouvelle région, déterminer que la nouvelle région correspond à une région trouvée dans une image segmentée précédente, dite région existante, si un critère représentatif d'une corrélation entre la nouvelle région et au moins une région existante est respecté.

Ainsi, si le procédé de suivi de région ne permet pas de suivre une région détectée dans une image segmentée précédente dans la seconde image segmentée, il est possible de déterminer par une méthode alternative si cette région est présente dans la seconde image segmentée.

Selon un mode de réalisation, le critère représentatif d'une corrélation entre une nouvelle région et une région existante est fonction d'un rapport entre une surface d'une intersection entre la région existante et la nouvelle région et une valeur minimum de surface entre la surface de la nouvelle région et la surface de la région existante et/ou fonction d'une distance entre un centre de gravité de la nouvelle région et un centre de gravité de la région existante.

Selon un mode de réalisation, lorsque le nombre de régions admissibles est inférieur au deuxième seuil prédéterminé, appliquer le traitement pour une nouvelle seconde image acquise si une durée depuis l'acquisition de la première image acquise est inférieure ou égale à une durée prédéterminée.

Selon un mode de réalisation, si la durée depuis l'acquisition de la première image acquise est supérieure à la durée prédéterminée, mettre fin aux acquisitions d'images et générer une information permettant de générer une image comprenant un nombre de zones d'images acquises au plus égal au deuxième seuil prédéterminé, chaque zone correspondant à une région identifiée dans les images segmentées depuis la première image segmentée jusqu'à la deuxième image segmentée, chaque région utilisée pour définir une zone ayant une note de confiance supérieure aux notes de confiance des zones non utilisées pour définir une zone.

Ainsi, le procédé a une durée maximum, ce qui permet d'éviter qu'un utilisateur reste trop longtemps devant le système de capture d'empreintes digitales. Le procédé permet malgré tout d'obtenir une information permettant de générer une image, même si certaines régions utilisées pour définir une zone de cette image ont une note de confiance insuffisante.

Selon un mode de réalisation, chaque incrément est inversement proportionnel à la fréquence d'acquisition d'images prédéfinie.

Ainsi, la note de confiance d'une région issue d'un capteur ayant une faible fréquence d'acquisition évolue plus vite que la note de confiance d'une région issue d'un capteur ayant une fréquence d'acquisition plus élevée. Le nombre d'images nécessaires pour générer une information permettant d'obtenir une image comprenant, pour chaque région admissible, une zone d'une image acquise correspondant à la région admissible est donc plus faible lorsque le capteur d'images utilisé possède une fréquence d'acquisition d'images faible que lorsque le capteur d'images utilisé possède une fréquence d'acquisition d'images plus élevée.

Selon un deuxième aspect de l'invention, l'invention concerne un dispositif permettant d'obtenir une image d'au moins une empreinte digitale à partir d'une séquence d'images acquises par un capteur d'images d'un système de capture d'empreintes digitales faisant des acquisitions d'images avec une fréquence d'acquisition d'images prédéfinie dépendante dudit capteur d'images. Le dispositif comprend : des moyens d'obtention pour obtenir une image, dite première image segmentée, résultant d'une application d'un procédé de segmentation d'images sur une première image acquise, ledit procédé de segmentation étant adapté pour identifier des régions correspondant à des empreintes dans une image; des moyens d'obtention pour obtenir au moins une image, dite seconde image segmentée, résultant d'une application du procédé de segmentation d'images à au moins une image acquise suivant la première image acquise, dite seconde image acquise; des moyens de traitement pour appliquer un procédé de suivi de régions aux régions identifiées dans chaque image segmentée depuis la première image segmentée jusqu'à la seconde image segmentée ; des moyens de traitement pour déterminer une note de confiance pour chaque région identifiée, la note de confiance d'une région de la seconde image segmentée associée à une région d'une image segmentée précédente étant une somme entre la note de confiance de ladite région de l'image précédente et d'un incrément dépendant de la fréquence d'acquisition d'images prédéfinie, et la note de confiance d'une région identifiée dans au moins une image segmentée précédant la seconde image segmentée mais n'ayant pas de région correspondante dans la seconde image segmentée étant une différence entre la note de confiance de ladite région de l'image segmentée précédente et d'un deuxième incrément dépendant de la fréquence d'acquisition d'images prédéfinie et, des moyens de traitement pour déterminer un nombre de régions, dites régions admissibles, identifiées dans les images segmentées depuis la première image segmentée jusqu'à la deuxième image segmentée ayant une note de confiance supérieure à un premier seuil prédéterminé ; et, des moyens de traitement pour mettre fin aux acquisitions d'images lorsque le nombre de régions admissibles est égal à un deuxième seuil prédéterminé, et pour générer une information permettant d'obtenir une image comprenant, pour chaque région admissible, une zone d'une image acquise correspondant à la région admissible.

Selon un troisième aspect de l'invention, l'invention concerne un système comprenant un dispositif selon le deuxième aspect.

Selon un quatrième aspect, l'invention concerne un programme d'ordinateur, comprenant des instructions pour mettre en œuvre, par un dispositif, le procédé selon le premier aspect, lorsque ledit programme est exécuté par un processeur dudit dispositif.

Selon un cinquième aspect, l'invention concerne des moyens de stockage, stockant un programme d'ordinateur comprenant des instructions pour mettre en œuvre, par un dispositif, le procédé selon le premier aspect, lorsque ledit programme est exécuté par un processeur dudit dispositif.

## BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 décrit schématiquement un exemple de système de capture d'empreintes digitales utilisant le procédé selon l'invention ;
- la Fig. 2 illustre schématiquement de manière détaillée le système de capture d'empreintes digitales ;
- la Fig. 3 illustre schématiquement un exemple d'architecture matérielle d'un module de traitement mettant en œuvre le procédé selon l'invention ;
- la Fig. 4 illustre schématiquement un exemple de procédé permettant d'obtenir des images selon l'invention ;
- Les Figs. 5A et 5B illustrent schématiquement un premier cas où un procédé de suivi de régions pourrait échouer lors d'une mise en correspondance de régions ; et,
- Les Figs. 6A et 6B illustrent schématiquement un deuxième cas où un procédé de suivi de régions pourrait échouer lors d'une mise en correspondance de régions.

## DESCRIPTION DETAILLEE DE DIVERS MODES DE REALISATION

Le procédé de l'invention est décrit dans un contexte où un système de capture d'empreintes digitales par contact utilisant un capteur TCM fait des acquisitions d'images d'une pluralité de doigts. Le procédé est toutefois adapté pour fonctionner avec un système de capture d'empreintes digitales par contact utilisant un capteur optique ou un système de capture d'empreintes digitales sans contact utilisant un capteur optique ou un capteur TCM.

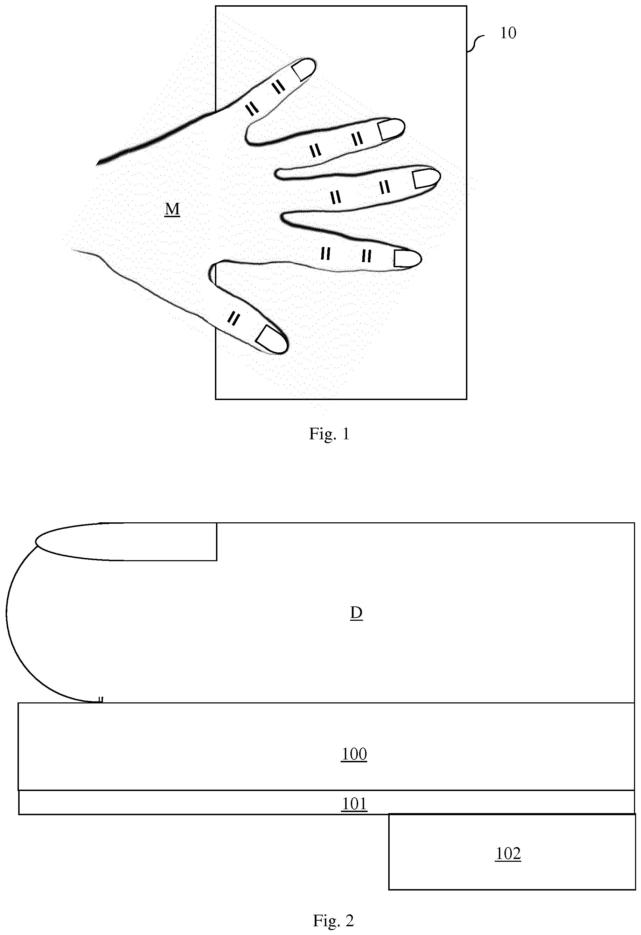

La **Fig. 1** décrit schématiquement un exemple de système de capture d'empreintes digitales utilisant le procédé selon l'invention.

Dans la Fig. 1, une pluralité de doigts d'une main M est posée sur un système de capture d'empreintes digitales 10.

La **Fig. 2** illustre schématiquement de manière détaillée le système de capture d'empreintes digitales 10.

Le système de capture d'empreintes digitales 10 comprend une lame transparente 100 comprenant une face supérieure sur laquelle est posée la pluralité de doigts, dont seul un doigt D est représenté dans la Fig. 2. Situé en dessous de la lame transparente 100 et collé à la face inférieure de ladite lame, le système de capture d'empreintes digitales 10 comprend un capteur TCM 101. Le capteur TCM 101 est positionné de sorte à générer une image de la pluralité de doigts. Le système de capture d'empreintes digitales 10 comprend de plus un module de traitement 102.

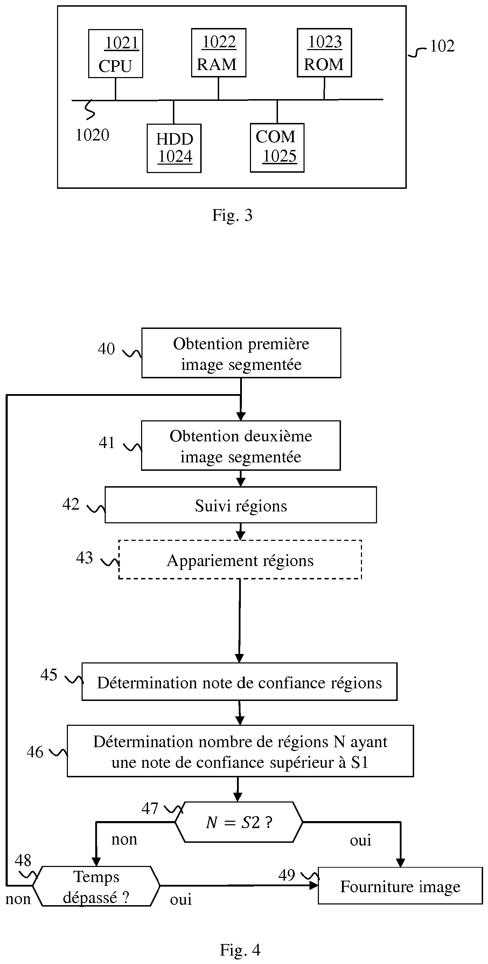

La **Fig. 3** illustre schématiquement un exemple d'architecture matérielle du module de traitement 102.

Selon l'exemple d'architecture matérielle représenté à la Fig. 3, le module de traitement 102 comprend alors, reliés par un bus de communication 1020 : un processeur ou CPU (« Central Processing Unit » en anglais) 1021 ; une mémoire vive RAM (« Random Access Memory » en anglais) 1022 ; une mémoire morte ROM (« Read Only Memory » en anglais) 1023 ; une unité de stockage telle qu'un disque dur ou un lecteur de support de stockage, tel qu'un lecteur de cartes SD (« Secure Digital » en anglais) 1024 ; au moins une interface de communication 1025 permettant au module de traitement 102 de recevoir les images acquises par le capteur d'images 101.

Le processeur 1021 est capable d'exécuter des instructions chargées dans la RAM 1022 à partir de la ROM 1023, d'une mémoire externe (non représentée), d'un support de stockage (tel qu'une carte SD), ou d'un réseau de communication. Lorsque le module de traitement 102 est mis sous tension, le processeur 1021 est capable de lire de la RAM 1022 des instructions et de les exécuter. Ces instructions forment un programme d'ordinateur causant la mise en œuvre, par le processeur 1021, du procédé décrit en relation avec la Fig. 4.

Le procédé décrit en relation avec la Fig. 4 peut être implémenté sous forme logicielle par exécution d'un ensemble d'instructions par une machine programmable, par exemple un DSP (« Digital Signal Processor » en anglais), un microcontrôleur ou un GPU (processeur graphique, « Graphics Processing Unit » en terminologie anglo-saxonne), ou être implémenté sous forme matérielle par une machine ou un composant dédié, par exemple un FPGA (« Field-Programmable Gate Array » en anglais) ou un ASIC (« Application-Specific Integrated Circuit » en anglais).

La **Fig. 4** illustre schématiquement un exemple de procédé permettant d'obtenir des images selon l'invention.

Le capteur d'images 101 fait des acquisitions d'images avec une fréquence d'acquisition d'image prédéfinie *F*. Lorsqu'un utilisateur souhaite se faire identifier ou authentifier, il applique une pluralité de doigts sur la face supérieure de la lame transparente 100. Un dispositif de déclenchement non représenté dans la Fig. 2 déclenche alors une acquisition d'une séquence d'images. Le dispositif de déclenchement est, par exemple, un bouton que l'utilisateur presse lorsqu'il applique la main sur la face supérieure de la lame transparente 100 ou une cellule photoélectrique qui déclenche l'acquisition de la séquence d'images lorsqu'une présence d'au moins un doigt est détectée sur ladite face supérieure.

En même temps qu'il déclenche l'acquisition de la séquence d'image, le dispositif de déclenchement démarre un minuteur qui mesure une durée *d* depuis l'acquisition de la première image d'une séquence d'images.

Dans une étape 40, le module de traitement 102 obtient une image, dite première image segmentée, résultant d'une application d'un procédé de segmentation d'images sur une première image acquise par le capteur d'images 101. Le procédé de segmentation est adapté pour identifier des régions correspondant à des empreintes dans une image. Le procédé de segmentation est par exemple un procédé décrit dans le document « Fingerprint segmentation Based on Improved Active Contour, B. Weixin, X. Deqin, Z. Yi-wei, Internation conference on Networking and digital society, 2009 » ou un procédé décrit dans le document « X. Chen, J. Tian, J. Cheng, X Yang, Segmentation of fingerprint images using linear classifier, Eurasip Journal on applied signal processing 2004, P. 480-494 » ou un procédé décrit dans le document «A. M. Bazen, S. H. Gerez, Segmentation offingerprint images, ProRISC 2001 Workshop on Circuits, Systems and Signal Processing, Veldhoven, The Netherlands, November 2001 ». Des procédés de segmentation plus généraux peuvent aussi être utilisés tels que le procédé décrit dans «N. Dhanachandra and al, Image segmentation using K-means clustering algorithm and substractive clustering algorithm, Procedia Computer Science, Volume 54, 2015, 764-771 » ou le procédé décrit dans le document « A new Markov random field segmentation method for breast lesion segmentation in MR images, Journal of Medical Signals and Sensors, 2011, 156-164 ». Lorsque le procédé de segmentation d'images permet de détecter au moins une région dans une image, chaque région détectée est représentée par son contour. Le contour d'une région permet ainsi de localiser cette région dans une image segmentée.

Dans un mode de réalisation, chaque image segmentée fournie par le capteur d'images, et donc la première image segmentée, représente chaque région identifiée par le procédé de segmentation sous forme d'un masque, chaque pixel d'un masque étant représenté par une même valeur différente d'une valeur attribuée aux pixels du fond de l'image segmentée. En supposant que l'image segmentée est une image de niveaux de gris où chaque pixel est codé sur « 8 » bits entre « 0 » et « 255 », chaque pixel du fond de l'image segmentée est par exemple associé à la valeur « 0 », et chaque pixel d'une région est associé à la valeur « 200 ». Dans un mode de réalisation, les pixels de deux régions distinctes sont associés à des valeurs différentes.

Dans une étape 41, le module de traitement 102 obtient une image, dite seconde image segmentée, résultant d'une application du procédé de segmentation d'images à une seconde image, dite seconde image acquise, suivant la première image acquise.

Dans une étape 42, le module de traitement 102 applique un procédé de suivi de régions aux régions identifiées dans chaque image segmentée depuis la première image segmentée jusqu'à la seconde image segmentée. Comme on peut le lire dans le document « A. Yilmaz, O. Javed and M. Shah, « Object tracking : a survey », ACM computing Surveys, Vol. 38, 2006 » la littérature foisonne de procédés de suivi d'objets (*i.e.* suivi de régions). Dans un mode de réalisation, le module de traitement 102 applique un procédé basé sur un filtrage de Kalman. Le filtrage de Kalman est décrit dans le document « R. E. Kalman, A new approach for linear filtering and prediction problems, journal of basic engineering, vol. 82, 1960, P. 33-45 ». Par exemple, le module de traitement utilise un procédé décrit dans le document « N. Perterfreund, Robust Tracking of position and velocity with Kalman Snakes, IEEE Transactions on pattern analysis and machine intelligence, VOL. 21, NO. 6, June » ou un procédé décrit dans le document « S.Saravanan and Dr. K.A. Parthasarathy, Video object detection and tracking using Kalman filter and color histogram-based matching algorithm, International Journal of Engineering Research and Development, Volume 9, Issue 7 (January 2014), PP. 31-39 ». Dans un autre mode de réalisation, le module de traitement applique un procédé basé sur une descente de gradients décrite dans le document « M. Bertalmio, G. Sapiro, G. Randall, Morphing active contours, IEEE Transactions on pattern analysis and machine intelligence 22, 7, 733-737, 2000 » ou un procédé décrit dans le document «Chen-Chien Hsu and Guo-Tang Dai, Multiple object tracking using particle swarm optimization, World Academy of Science, Engineering and Technology International Journal of Electronics and Communication Engineering, Vol:6, No:8, 2012 » ou un procédé décrit dans le document « Zhou and al., Object tracking using SIFT features and mean shift, Computer Vision and Image Understanding, Volume 113, Issue 3, March 2009, Pages 345-352 ». Le suivi de région permet de déterminer, parmi les régions identifiées dans la seconde image segmentée, quelles régions ont une région correspondante dans une ou plusieurs images segmentées précédentes de la séquence d'images. Certaines régions peuvent ainsi être suivies sur toute la séquence depuis la première image segmentée jusqu'à la seconde image segmentée, d'autres peuvent n'apparaître que dans certaines images. C'est par exemple, le cas lorsqu'un doigt n'est pas appuyé sur la face supérieure de la lame transparente 100 avec une force égale pendant l'acquisition des images de la séquence.

Dans une étape 43 optionnelle, pour chaque région de la seconde image segmentée n'ayant pas de région correspondante dans une image segmentée précédente, dite nouvelle région, le module de traitement détermine que la nouvelle région correspond à une région trouvée dans une image segmentée précédente, dite région existante, si un critère représentatif d'une corrélation entre la nouvelle région et au moins une région existante est respecté. L'étape 43 vient donc palier des éventuels défauts du procédé de suivi de régions. En effet, des régions de la seconde image segmentée qui n'auraient pas été associées à des régions d'images segmentées précédentes par le procédé de suivi de régions peuvent quand même être associées à des régions d'images segmentées précédentes. Lorsque le critère de corrélation est respecté entre une nouvelle région et une région existante, le module de traitement considère que la région existante est présente dans la seconde image segmentée. Tout se passe donc comme si la région existante avait été suivie par le procédé de suivi de région dans la seconde image segmentée.

Dans un mode de réalisation, un critère de corrélation entre une nouvelle région et une région existante, est fonction d'un rapport $c1$ entre une surface d'une intersection entre les deux régions et une valeur minimum de surface entre la surface de la nouvelle région et la surface de la région existante :

$$c1 = \frac{S_{inter}}{Min\,(S_{NR}, S_{EX})}$$

où $S_{inter}$ est la surface de l'intersection entre la région existante et la nouvelle région, $S_{NR}$ est la surface de la nouvelle région, $S_{EX}$ est la surface de la région existante et Min(A,B) est la valeur minimale entre $A$ et $B$.

Ainsi, si la mesure $c1>C1$, ou $C1$ est un seuil prédéterminé, le module de traitement 102 considère que la nouvelle région correspond à la région existante. Dans un mode de réalisation $C1$=0.5, c'est-à-dire que les deux régions doivent avoir au moins 50% de surface en commun pour être mises en correspondance.

Dans un mode de réalisation, une mesure de corrélation entre une nouvelle région et une région existante, est fonction d'une distance $c2$ entre un centre de gravité de la nouvelle région et un centre de gravité de la région existante. Ainsi, si la distance $c2<C2$, ou $C2$ est un seuil de distance prédéterminé, le module de traitement 102 considère que la nouvelle région correspond à la région existante. Dans un mode de réalisation, le seuil de distance $C2$=10 pixels.

Dans un mode de réalisation, le module de traitement 102 utilise une mesure globale $CG$ prenant en compte le rapport $c1$ et la distance $c2$. Par exemple la mesure globale CG est la suivante :

$$CG = c1 - e^{(c2-4)}$$

Ainsi, si $CG>C1$ le module de traitement 102 considère que la nouvelle région correspond à la région existante.

L'étape 43 permet de traiter des cas où un même doigt est segmenté avec une, deux ou trois phalanges suivant les images. Le procédé de suivi de région a alors du mal à effectuer le suivi bien que cela soit le même doigt.

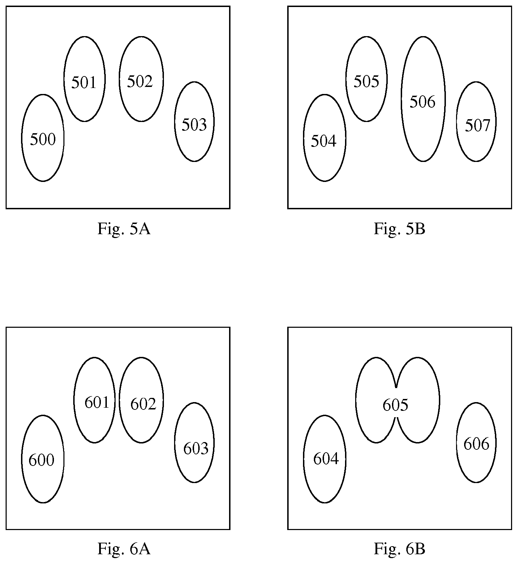

Les **Figs. 5A** et **5B** illustrent schématiquement un premier cas ou un procédé de suivi de régions pourrait échouer lors de la mise en correspondance de régions.

La Fig. 5A illustre une première image segmentée dans laquelle quatre régions ont été détectées par le procédé de segmentation. La Fig. 5B illustre une deuxième image segmentée suivant directement la première image segmentée dans laquelle quatre régions ont aussi été détectées par le procédé de segmentation. Le procédé de suivi de région est capable de mettre en correspondance la région 500 avec la région 504, la région 501 avec la région 505 et la région 503 avec la région 507. Par contre, le procédé de suivi de régions n'est pas capable d'associer la région 502 avec la région 506 car ces deux régions, bien que correspondant au même doigt, sont très différentes. La région 506 correspond en effet à deux phalanges du doigt alors que la région 502 ne correspond qu'à une phalange. Dans ce cas, l'étape 43 permet d'associer la région 506 à la région 502. La région 502 est alors considérée comme présente dans la deuxième image.

Les **Figs. 6A** et **6B** illustrent schématiquement un deuxième cas ou un procédé de suivi de régions pourrait échouer lors de la mise en correspondance de régions.

La Fig. 6A illustre une troisième image segmentée dans laquelle quatre régions ont été détectée par le procédé de segmentation. La Fig. 6B illustre une quatrième image segmentée suivant directement la troisième image segmentée. Seulse trois régions ont été détectées dans la quatrième image. Le procédé de suivi est capable de mettre en correspondance la région 600 avec la région 604 et la région 603 avec la région 606. Mais le procédé de suivi n'est pas capable de mettre en correspondance les régions 601 et 602 avec la région 605. Ce problème survient lorsque deux doigts sont très proches et que leur proximité induit le procédé de segmentation en erreur puisqu'il ne sait pas dans ce cas s'il a affaire à une ou deux régions. Dans ce cas, l'étape 43 permet d'associer la région 605 à la fois à la région 601 et à la région 602. Les régions 601 et 602 sont alors considérées comme présentes dans la quatrième image.

L'étape 42, ou l'étape 43 lorsqu'elle est exécutée, est suivie d'une étape 45.

Au cours de l'étape 45, le module de traitement 102 détermine une note de confiance $\theta_{curr}$ pour chaque région identifiée dans chaque image segmentée, la note de confiance $\theta_{curr}$ d'une région de la seconde image segmentée (i.e. l'image segmentée courante) associée à une région d'une image segmentée précédente étant une somme entre la note de confiance de ladite région de l'image précédente $\theta_{pre}$ et d'un premier incrément $\Delta1(F)$ dépendant de la fréquence d'acquisition d'images prédéfinie F.

$$\theta_{curr} = \theta_{pre} + \Delta1(F)$$

Le premier incrément est une fonction décroissante de la fréquence d'acquisition d'images prédéfinie F. Par exemple :

$$\Delta1(F) = \frac{K1}{F}$$

où K1 est une constante par exemple égale à « 2 ».

Au cours de l'étape 45, la note de confiance $\theta_{curr}$ d'une région identifiée dans au moins une image segmentée précédente mais n'ayant pas de région correspondante dans la seconde image segmentée (i.e. l'image segmentée courante), est une différence entre la note de confiance de ladite région de l'image précédente $\theta_{pre}$ et d'un deuxième incrément $\Delta2(F)$ dépendant de la fréquence d'acquisition d'images prédéfinie F.

$$\theta_{curr} = \theta_{pre} - \Delta2(F)$$

Le deuxième incrément est lui aussi une fonction décroissante de la fréquence d'acquisition d'images prédéfinie F. Par exemple :

$$\Delta2(F) = \frac{K2}{F}$$

où K2 est une constante par exemple égale à « 1 ».

Ainsi, une région qui est présente dans chaque image de la séquence voit sa note augmenter plus rapidement qu'une région qui n'apparaît pas dans certaines images de la séquence.

On note que pour chaque nouvelle région qui apparaît dans une image segmentée mais qui n'a pas de région correspondante dans une image segmentée précédente, la note de confiance de ladite nouvelle région est initialisée à zéro lorsque cette région est identifiée par le procédé de segmentation.

Dans une étape 46, le module de traitement 102 détermine un nombre N de régions, dites régions admissibles, identifiées dans les images segmentées depuis la première image segmentée jusqu'à la deuxième image segmentée (i.e. image segmentée courante) ayant une note de confiance supérieure à un seuil de confiance prédéterminé S1. Par exemple, dans un mode de réalisation, le seuil de confiance prédéterminé S1 est égal à « 1.5 ».

Dans une étape 47, le module de traitement 102 compare le nombre de régions admissibles N avec un nombre de régions prédéterminé S2. Lorsque le nombre de régions admissibles N est égal au nombre de régions prédéterminé S2, le module de traitement 102 met fin aux acquisitions d'images et génère une information permettant d'obtenir une image, dite image finale, comprenant, pour chaque région admissible, une zone d'une image acquise correspondant à la région admissible lors d'une étape 49. Dans un mode de réalisation, l'information générée est directement l'image finale. Pour générer l'image finale, le module de traitement 102 détermine dans quelle image segmentée chacune des S2 régions a obtenu une note de confiance maximale. Lorsque, pour chaque région, une image segmentée a été déterminée, le module de traitement 102 extrait de l'image acquise correspondant à l'image segmentée, les pixels situés dans une zone correspondant spatialement à la région de l'image segmentée et les insère dans l'image finale à la même position. Les pixels de l'image finale qui ne correspondent pas à une région sont mis à une valeur prédéfinie. L'image finale représente donc des empreintes sur un fond uniforme.

Dans un mode de réalisation, l'information générée comprend une information représentative d'un ensemble de pointeurs indiquant pour chaque pixel à utiliser pour générer l'image finale, l'image acquise dans laquelle aller chercher ledit pixel et la position dudit pixel dans ladite image acquise.

Lorsque le nombre de régions admissibles N est inférieur au nombre de régions prédéterminé S2, le module de traitement 102 compare la durée d depuis l'acquisition de la première image acquise à une durée D prédéterminée correspondant à un temps d'acquisition maximum. La durée prédéterminée $D$ correspond à un temps maximum durant lequel un utilisateur doit laisser sa main dans le système de capture d'empreintes digitales 10. Dans un mode de réalisation, la durée prédéterminée $D$ est de « 2 » secondes. Si la durée $d$ est inférieure ou égale à la durée prédéterminée $D$, le module de traitement 102 retourne à l'étape 41 au cours de laquelle il obtient une nouvelle seconde image segmentée.

Si $d > D$, lors de l'étape 49, le module de traitement 102 met fin aux acquisitions d'images et génère une image finale avec les régions qu'il a à sa disposition. L'image finale comprend alors un nombre de zones au plus égal au nombre de régions prédéterminé $S2$, chaque zone correspondant à une région identifiée dans les images segmentées depuis la première image segmentée jusqu'à la deuxième image segmentée, chaque région utilisée pour définir une zone ayant une note de confiance supérieure aux notes de confiance des zones non utilisées pour définir une zone. En d'autres termes, le module de traitement choisit un maximum de régions parmi les régions identifiées dans les images segmentées, sans dépasser le nombre de régions prédéterminé $S2$. Les régions choisies sont les régions identifiées dans les images segmentées associées aux notes de confiance les plus élevées. Parmi ces régions choisies, certaines régions peuvent avoir une note de confiance supérieure au seuil de confiance S1, et d'autres, une note de confiance inférieure au seuil de confiance S1.

## Revendications

1. Procédé permettant d'obtenir une image d'au moins une empreinte digitale à partir d'une séquence d'images acquises par un capteur d'images d'un système de capture d'empreintes digitales (10) faisant des acquisitions d'images avec une fréquence d'acquisition d'images prédéfinie dépendante dudit capteur d'images, **caractérisé en ce que** le procédé comprend :

    obtenir (40) une image, dite première image segmentée, résultant d'une application d'un procédé de segmentation d'images sur une première image acquise, ledit procédé de segmentation étant adapté pour identifier des régions correspondant à des empreintes dans une image ; pour chaque image acquise, dite seconde image acquise, suivant la première image acquise appliquer un traitement comprenant:

        obtenir (41) une image, dite seconde image segmentée, résultant d'une application du procédé de segmentation d'images à la seconde image acquise ; appliquer (42) un procédé de suivi de régions aux régions identifiées dans chaque image segmentée depuis la première image segmentée jusqu'à la seconde image segmentée ;
détérminer (45) une note de confiance pour chaque région identifiée, la note de confiance d'une région de la seconde image segmentée associée à une région d'une image segmentée précédente étant une somme entre la note de confiance de ladite région de l'image précédente et d'un incrément dépendant de la fréquence d'acquisition d'images prédéfinie, et la note de confiance d'une région identifiée dans au moins une image segmentée précédant la seconde image segmentée mais n'ayant pas de région correspondante dans la seconde image segmentée étant une différence entre la note de confiance de ladite région de l'image segmentée précédente et d'un deuxième incrément dépendant de la fréquence d'acquisition d'images prédéfinie ; et,
détérminer (46) un nombre de régions, dites régions admissibles, identifiées dans les images segmentées depuis la première image segmentée jusqu'à la deuxième image segmentée ayant une note de confiance supérieure à un premier seuil prédéterminé ; et,
lorsque le nombre de régions admissibles est égal à un deuxième seuil prédéterminé, mettre fin aux acquisitions d'images et générer une information permettant d'obtenir une image comprenant, pour chaque région admissible, une zone d'une image acquise correspondant à la région admissible.

2. Procédé selon la revendication 1, **caractérisé en ce que** pour chaque région de la seconde image segmentée n'ayant pas de région correspondante dans une image segmentée précédente, dite nouvelle région, déterminer (43) que la nouvelle région correspond à une région trouvée dans une image segmentée précédente, dite région existante, si un critère représentatif d'une corrélation entre la nouvelle région et au moins une région existante est respecté.

3. Procédé selon la revendication 2, **caractérisé en ce que** le critère représentatif d'une corrélation entre une nouvelle région et une région existante est fonction d'un rapport entre une surface d'une intersection entre la région existante et la nouvelle région et une valeur minimum de surface entre la surface de la nouvelle région et la surface de la région existante et/ou fonction d'une distance entre un centre de gravité de la nouvelle région et un centre de gravité de la région existante.

4. Procédé selon la revendication 1, 2 ou 3, **caractérisé en ce que** lorsque le nombre de régions admissibles est inférieur au deuxième seuil prédéterminé, appliquer le traitement pour une nouvelle seconde image acquise si une durée depuis l'acquisition de la première image acquise est inférieure ou égale à une durée prédéterminée.

5. Procédé selon la revendication 4, **caractérisé en ce que**, si la durée depuis l'acquisition de la première image acquise est supérieure à la durée prédéterminée, mettre fin aux acquisitions d'images et générer une information permettant de générer une image comprenant un nombre de zones d'images acquises au plus égal au deuxième seuil prédéterminé, chaque zone correspondant à une région identifiée dans les images segmentées depuis la première image segmentée jusqu'à la deuxième image segmentée, chaque région utilisée pour définir une zone ayant une note de confiance supérieure aux notes de confiance des zones non utilisées pour définir une zone.

6. Procédé selon l'une quelconque des revendications précédentes, **caractérisé en ce que** chaque incrément est inversement proportionnel à la fréquence d'acquisition d'images prédéfinie.

7. Dispositif permettant d'obtenir une image d'au moins une empreinte digitale à partir d'une séquence d'images acquises par un capteur d'images d'un système de capture d'empreintes digitales (10) faisant des acquisitions d'images avec une fréquence d'acquisition d'images prédéfinie dépendante dudit capteur d'images, **caractérisé en ce que** le dispositif comprend :

des moyens d'obtention pour obtenir (40) une image, dite première image segmentée, résultant d'une application d'un procédé de segmentation d'images sur une première image acquise, ledit procédé de segmentation étant adapté pour identifier des régions correspondant à des empreintes dans une image;
des moyens d'obtention pour obtenir (41) au moins une image, dite seconde image segmentée, résultant d'une application du procédé de segmentation d'images à au moins une image acquise suivant la première image acquise, dite seconde image acquise;
des moyens de traitement pour appliquer (42) un procédé de suivi de régions aux régions identifiées dans chaque image segmentée depuis la première image segmentée jusqu'à la seconde image segmentée ;
des moyens de traitement pour déterminer (45) une note de confiance pour chaque région identifiée, la note de confiance d'une région de la seconde image segmentée associée à une région d'une image segmentée précédente étant une somme entre la note de confiance de ladite région de l'image précédente et d'un incrément dépendant de la fréquence d'acquisition d'images prédéfinie, et la note de confiance d'une région identifiée dans au moins une image segmentée précédant la seconde image segmentée mais n'ayant pas de région correspondante dans la seconde image segmentée étant une différence entre la note de confiance de ladite région de l'image segmentée précédente et d'un deuxième incrément dépendant de la fréquence d'acquisition d'images prédéfinie ; et,
des moyens de traitement pour déterminer (46) un nombre de régions, dites régions admissibles, identifiées dans les images segmentées depuis la première image segmentée jusqu'à la deuxième image segmentée ayant une note de confiance supérieure à un premier seuil prédéterminé ; et,
des moyens de traitement pour mettre fin aux acquisitions d'images lorsque le nombre de régions admissibles est égal à un deuxième seuil prédéterminé, et pour générer une information permettant d'obtenir une image comprenant, pour chaque région admissible, une zone d'une image acquise correspondant à la région admissible.

8. Système comprenant un dispositif selon la revendication 7.

9. Programme d'ordinateur, **caractérisé en ce qu'**il comprend des instructions pour mettre en œuvre, par un dispositif (102), le procédé selon l'une quelconque des revendications 1 à 6, lorsque ledit programme est exécuté par un processeur (1021) dudit dispositif.

10. Moyens de stockage, **caractérisés en ce qu'**ils stockent un programme d'ordinateur comprenant des instructions pour mettre en œuvre, par un dispositif (102), le procédé selon l'une quelconque des revendications 1 à 6, lorsque ledit programme est exécuté par un processeur (1021) dudit dispositif.

**Patentansprüche**

1. Verfahren zum Erhalt eines Bilds mindestens eines Fingerabdrucks anhand einer Sequenz von Bildern, die von einem Bildsensor eines Fingerabdruckerfassungssystems (10) aufgenommen werden, der Bildaufnahmen mit einer vorgegebenen Bildaufnahmefrequenz vornimmt, die von dem Bildsensor abhängig ist, **dadurch gekennzeichnet, dass** das Verfahren Folgendes umfasst:

Erhalten (40) eines Bilds, erstes segmentiertes Bild genannt, das aus einer Anwendung eines Bildsegmentierungsverfahrens auf ein erstes aufgenommenes Bild hervorgeht, wobei das Segmentierungsverfahren geeignet ist, Gebiete zu identifizieren, die Abdrücken in einem Bild entsprechen;

für jedes aufgenommene Bild, zweites aufgenommene Bild genannt, das auf das erste aufgenommene Bild folgt, Anwenden einer Verarbeitung umfassend:

Erhalten (41) eines Bilds, zweites segmentiertes Bild genannt, das aus einer Anwendung des Bildsegmentierungsverfahrens auf das zweite aufgenommene Bild hervorgeht;

Anwenden (42) eines Verfahrens zur Verfolgung von Gebieten auf die identifizierten Gebiete in jedem segmentierten Bild vom ersten segmentierten Bild bis zum zweiten segmentierten Bild;

Bestimmen (45) einer Vertrauensnote für jedes identifizierte Gebiet, wobei die Vertrauensnote eines Gebiets des zweiten segmentierten Bilds, das einem Gebiet eines vorausgehenden segmentierten Bilds zugeordnet ist, eine Summe zwischen der Vertrauensnote des Gebiets des vorausgehenden Bilds und einem Inkrement ist, das von der vorgegebenen Bildaufnahmefrequenz abhängig ist, und die Vertrauensnote eines identifizierten Gebiets in mindestens einem segmentierten Bild, das dem zweiten segmentierten Bild vorausgeht, jedoch kein entsprechendes Gebiet im zweiten segmentierten Bild aufweist, eine Differenz zwischen der Vertrauensnote des Gebiets des vorausgehenden segmentierten Bilds und einem zweiten Inkrement ist, das von der vorgegebenen Bildaufnahmefrequenz abhängig ist; und,

Bestimmen (46) einer Anzahl von Gebieten, zulässige Gebiete genannt, die in den segmentierten Bildern identifiziert werden, vom ersten segmentierten Bild bis zum zweiten segmentierten Bild, die eine Vertrauensnote über einer ersten vorbestimmten Schwelle aufweisen; und,

wenn die Anzahl von zulässigen Gebieten gleich einer zweiten vorbestimmten Schwelle ist, Beenden der Bilderfassungen und Erzeugen einer Information, die es gestattet, ein Bild zu erhalten, das für jedes zulässige Gebiet einen Bereich eines aufgenommenen Bilds umfasst, der dem zulässigen Gebiet entspricht.

2. Verfahren nach Anspruch 1, **dadurch gekennzeichnet, dass** für jedes Gebiet des zweiten segmentierten Bilds, das kein entsprechendes Gebiet in einem vorausgehenden segmentierten Bild aufweist, neues Gebiet genannt, Bestimmen (43), dass das neue Gebiet einem Gebiet entspricht, das in einem vorausgehenden segmentierten Bild gefunden wird, vorhandenes Gebiet genannt, wenn ein Kriterium, das für eine Korrelation zwischen dem neuen Gebiet und mindestens einem vorhandenen Gebiet repräsentativ ist, eingehalten wird.

3. Verfahren nach Anspruch 2, **dadurch gekennzeichnet, dass** das Kriterium, das für eine Korrelation zwischen dem neuen Gebiet und einem vorhandenen Gebiet repräsentativ ist, von einem Verhältnis zwischen einer Fläche einer Schnittmenge zwischen dem vorhandenen Gebiet und dem neuen Gebiet und einem Mindestflächenwert zwischen der Fläche des neuen Gebiets und der Fläche des vorhandenen Gebiets und/oder von einem Abstand zwischen einem Schwerpunkt des neuen Gebiets und einem Schwerpunkt des vorhandenen Gebiets abhängig ist.

4. Verfahren nach Anspruch 1, 2 oder 3, **dadurch gekennzeichnet, dass**, wenn die Anzahl von zulässigen Gebieten kleiner als die zweite vorbestimmte Schwelle ist, Anwenden der Verarbeitung für ein neues zweites aufgenommenes Bild, wenn eine Dauer von der Aufnahme des ersten aufgenommenen Bilds kleiner oder gleich einer vorbestimmten Dauer ist.

5. Verfahren nach Anspruch 4, **dadurch gekennzeichnet, dass**, wenn die Dauer von der Aufnahme des ersten aufgenommenen Bilds länger als die vorbestimmte Dauer ist, Beenden der Bildaufnahmen und Erzeugen einer Information, die es gestattet, ein Bild zu erzeugen, das eine Anzahl von Bereichen aufgenommener Bilder umfasst, die höchstens gleich der zweiten vorbestimmten Schwelle ist, wobei jeder Bereich einem identifizierten Gebiet in den segmentierten Bildern vom ersten segmentierten Bild bis zum zweiten segmentierten Bild entspricht, wobei jedes Gebiet, das dafür verwendet wird, einen Bereich zu definieren, eine höhere Vertrauensnote als die Vertrauensnoten der Bereiche aufweist, die nicht dafür verwendet werden, einen Bereich zu definieren.

6. Verfahren nach einem der vorhergehenden Ansprüche, **dadurch gekennzeichnet, dass** jedes Inkrement zur vorbestimmten Bildaufnahmefrequenz umgekehrt proportional ist.

7. Vorrichtung zum Erhalten eines Bilds mindestens eines Fingerabdrucks anhand einer Sequenz von Bildern, die von einem Bildsensor eines Fingerabdruckerfassungssystems (10) aufgenommen werden, der Bildaufnahmen mit einer vorgegebenen Bildaufnahmefrequenz vornimmt, die von dem Bildsensor abhängig ist, **dadurch gekennzeichnet, dass** die Vorrichtung Folgendes umfasst:

Erhaltungsmittel zum Erhalten (40) eines Bilds, erstes segmentiertes Bild genannt, das aus einer Anwendung eines Bildsegmentierungsverfahrens auf ein erstes aufgenommenes Bild hervorgeht, wobei das Segmentierungsverfahren geeignet ist, Gebiete zu identifizieren, die Abdrücken in einem Bild entsprechen;

Erhaltungsmittel zum Erhalten (41) mindestens eines Bilds, zweites segmentiertes Bild genannt, das aus einer Anwendung des Bildsegmentierungsverfahrens auf mindestens ein aufgenommenes Bild, das auf das erste aufgenommene Bild folgt, zweites aufgenommenes Bild genannt, hervorgeht;

Verarbeitungsmittel zum Anwenden (42) eines Verfahrens zur Verfolgung von Gebieten auf die identifizierten Gebiete in jedem segmentierten Bild vom ersten segmentierten Bild bis zum zweiten segmentierten Bild;

Bestimmungsmittel zum Bestimmen (45) einer Vertrauensnote für jedes identifizierte Gebiet, wobei die Vertrauensnote eines Gebiets des zweiten segmentierten Bilds, das einem Gebiet eines vorausgehenden segmentierten Bilds zugeordnet ist, eine Summe zwischen der Vertrauensnote des Gebiets des vorausgehenden Bilds und einem Inkrement ist, das von der vorgegebenen Bildaufnahmefrequenz abhängig ist, und die Vertrauensnote eines identifizierten Gebiets in mindestens einem segmentierten Bild, das dem zweiten segmentierten Bild vorausgeht, jedoch kein entsprechendes Gebiet im zweiten segmentierten Bild aufweist, eine Differenz zwischen der Vertrauensnote des Gebiets des vorausgehenden segmentierten Bilds und einem zweiten Inkrement ist, das von der vorgegebenen Bildaufnahmefrequenz abhängig ist; und,

Verarbeitungsmittel zum Bestimmen (46) einer Anzahl von Gebieten, zulässige Gebiete genannt, die in den segmentierten Bildern identifiziert werden, vom ersten segmentierten Bild bis zum zweiten segmentierten Bild, die eine Vertrauensnote über einer ersten vorbestimmten Schwelle aufweisen; und,

Verarbeitungsmittel zum Beenden der Bilderfassungen, wenn die Anzahl von zulässigen Gebieten gleich einer zweiten vorbestimmten Schwelle ist, und zum Erzeugen einer Information, die es gestattet, ein Bild zu erhalten, das für jedes zulässige Gebiet einen Bereich eines aufgenommenen Bilds umfasst, der dem zulässigen Gebiet entspricht.

8. System umfassend eine Vorrichtung nach Anspruch 7.

9. Computerprogramm, **dadurch gekennzeichnet, dass** es Anweisungen umfasst, um durch eine Vorrichtung (102) das Verfahren nach einem der Ansprüche 1 bis 6 durchzuführen, wenn das Programm von einem Prozessor (1021) der Vorrichtung ausgeführt wird.

10. Speichermittel, **dadurch gekennzeichnet, dass** sie ein Computerprogramm speichern, das Anweisungen umfasst, um durch eine Vorrichtung (102) das Verfahren nach einem der Ansprüche 1 bis 6 durchzuführen, wenn das Programm von einem Prozessor (1021) der Vorrichtung ausgeführt wird.

## Claims

1. Method for obtaining an image of at least one fingerprint from a sequence of images acquired by an image sensor of a fingerprint capture system (10) making acquisitions of images with a predefined image acquisition frequency dependent on said image sensor, **characterized in that** the method comprises:

obtaining (40) an image, referred to as the first segmented image, resulting from an application of an image segmentation method to a first acquired image, said segmentation method being suitable for identifying regions corresponding to prints in an image;

for each acquired image, referred to as the second acquired image, following the first acquired image, applying a processing comprising:

obtaining (41) an image, referred to as the second segmented image, resulting from an application of the image segmentation method to the second acquired image;

applying (42) a region-tracking method to the regions identified in each segmented image from the first segmented image to the second segmented image;

determining (45) a confidence mark for each region identified, the confidence mark of a region of the second segmented image associated with a region of a previous segmented image being a sum between the confidence mark of said region of the previous image and an increment dependent on the predefined image acquisition frequency, and the confidence mark of a region identified in at least one segmented image preceding the second segmented image but not having a corresponding region in the second segmented image being a difference between the confidence mark of said region of the previous segmented image and a second increment dependent on the predefined image acquisition frequency; and

determining (46) a number of regions, referred to as admissible regions, identified in the segmented images from the first segmented image to the second segmented image having a confidence mark higher than a first predetermined threshold; and,

when the number of admissible regions is equal to a second predetermined threshold, ending the acquisitions of images and generating information for obtaining an image comprising, for each admissible region, a zone of an acquired image corresponding to the admissible region.

2. Method according to Claim 1, **characterized in that**, for each region of the second segmented image not having a corresponding region in a previous segmented image, referred to as a new region, determining (43) that the new region corresponds to a region found in a previous segmented image, referred to as an existing region, if a criterion representing a correlation between the new region and at least one existing region is met.

3. Method according to Claim 2, **characterized in that** the criterion representing a correlation between a new region and an existing region is dependent on a ratio between a surface area of an intersection between the existing region and the new region and a minimum surface-area value between the surface area of the new region and the surface area of the existing region and/or dependent on a distance between a centre of gravity of the new region and a centre of gravity of the existing region.

4. Method according to Claim 1, 2 or 3, **characterized in that**, when the number of admissible regions is below the second predetermined threshold, applying the processing for a new second acquired image if a period of time since the acquisition of the first acquired image is less than or equal to a predetermined period of time.

5. Method according to Claim 4, **characterized in that**, if the period of time since the acquisition of the first acquired image is greater than the predetermined period of time, ending the acquisitions of images and generating information for generating an image comprising a number of acquired image zones at most equal to the second predetermined threshold, each zone corresponding to an identified region in the segmented images from the first segmented image to the second segmented image, each region used for defining a zone having a confidence mark higher than the confidence marks of the zones not used for defining a zone.

6. Method according to any one of the preceding claims, **characterized in that** each increment is inversely proportional to the predefined image acquisition frequency.

7. Device for obtaining an image of at least one fingerprint from a sequence of images acquired by an image sensor of a fingerprint capture system (10) making acquisitions of images with a predefined image acquisition frequency dependent on said image sensor, **characterized in that** the device comprises:

obtaining means for obtaining (40) an image, referred to as the first segmented image, resulting from an application of an image segmentation method to a first acquired image, said segmentation method being suitable for identifying regions corresponding to prints in an image;
obtaining means for obtaining (41) at least one image, referred to as the second segmented image, resulting from an application of the image segmentation method to at least one image acquired following the first acquired image, referred to as the second acquired image;
processing means for applying (42) a region-tracking method to the regions identified in each segmented image from the first segmented image to the second segmented image;
processing means for determining (45) a confidence mark for each identified region, the confidence mark of a region of the second segmented image associated with a region of a previous segmented image being a sum between the confidence mark of said region of the previous image and an increment dependent on the predefined image acquisition frequency, and the confidence mark of a region identified in at least one segmented image preceding the second segmented image but not having a corresponding region in the second segmented image being a difference between the confidence mark of said region of the previous segmented image and a second increment dependent on the predefined image acquisition frequency; and
processing means for determining (46) a number of regions, referred to as admissible regions, identified in the segmented images from the first segmented image to the second segmented image having a confidence mark higher than a first predetermined threshold; and
processing means for ending the acquisitions of images when the number of admissible regions is equal to a second predetermined threshold, and for generating information for obtaining an image comprising, for each admissible region, a zone of an acquired image corresponding to the admissible region.

8. System comprising a device according to Claim 7.

9. Computer program, **characterized in that** it comprises instructions for implementing, by means of a device (102), the method according to any one of Claims 1 to 6, when said program is executed by a processor (1021) of said device.

10. Storage means, **characterized in that** they store a computer program comprising instructions for implementing, by means of a device (102), the method according to any one of Claims 1 to 6, when said program is executed by a processor (1021) of said device.

10

M

Fig. 1

D

100

101

102

Fig. 2

Fig. 3

Fig. 4

Fig. 5A

Fig. 5B

Fig. 6A

Fig. 6B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018106987 A1

**Littérature non-brevet citée dans la description**

- **B. WEIXIN ; X. DEQIN ; Z. YI-WEI.** Fingerprint segmentation Based on Improved Active Contour. *Internation conference on Networking and digital society,* 2009
- **X. CHEN ; J. TIAN ; J. CHENG ; X YANG.** Segmentation of fingerprint images using linear classifier. *Eurasip Journal on applied signal processing,* 2004, 480-494
- **A. M. BAZEN ; S. H. GEREZ.** *Segmentation offingerprint images, ProRISC 2001 Workshop on Circuits, Systems and Signal Processing,* Novembre 2001
- **N. DHANACHANDRA.** Image segmentation using K-means clustering algorithm and substractive clustering algorithm. *Procedia Computer Science,* 2015, vol. 54, 764-771
- A new Markov random field segmentation method for breast lesion segmentation in MR images. *Journal of Medical Signals and Sensors,* 2011, 156-164
- **A. YILMAZ ; O. JAVED ; M. SHAH.** Object tracking : a survey. *ACM computing Surveys,* 2006, vol. 38
- **R. E. KALMAN.** *A new approach for linear filtering and prediction problems, journal of basic engineering,* 1960, vol. 82, 33-45
- **N. PERTERFREUND.** Robust Tracking of position and velocity with Kalman Snakes. *IEEE Transactions on pattern analysis and machine intelligence,* vol. 21 (6
- **S.SARAVANAN ; DR. K.A. PARTHASARATHY.** Video object detection and tracking using Kalman filter and color histogram-based matching algorithm. *International Journal of Engineering Research and Development,* Janvier 2014, vol. 9 (7), 31-39
- **M. BERTALMIO ; G. SAPIRO ; G. RANDALL.** Morphing active contours. *IEEE Transactions on pattern analysis and machine intelligence,* 2000, vol. 22 (7), 733-737
- **CHEN-CHIEN HSU ; GUO-TANG DAI.** Multiple object tracking using particle swarm optimization. *World Academy of Science, Engineering and Technology International Journal of Electronics and Communication Engineering,* 2012, vol. 6 (8
- **ZHOU.** *Object tracking using SIFT features and mean shift, Computer Vision and Image Understanding,* Mars 2009, vol. 113 (3), 345-352